# FASCICULE DE BREVET EUROPEEN

(11) **EP 0 973 591 B1**
(45) Date de publication et mention de la délivrance du brevet: **27.11.2002**
(21) Numéro de dépôt: 97919492.5
(22) Date de dépôt: 07.04.1997
(51) Int. Cl.: B01D 11/04, B01D 11/02

(54) **PROCEDE ET INSTALLATION D'UNE RESOLUTION D'UN MELANGE**
VERFAHREN UND APPARAT ZUR AUFLÖSUNG EINER MISCHUNG
PROCESS AND APPARATUS FOR A MIXTURE RESOLUTION

(43) Date de publication de la demande: 26.01.2000
(73) Titulaire: Charzat, Claude, 69009 Lyon (FR); INSTITUT FRANCAIS DU PETROLE, 92852 Rueil-Malmaison Cedex (FR)
(72) Inventeur: CHARZAT, Claude, 69009 Lyon (FR)
(74) Mandataire: Guerre, Dominique
(86) Numéro de dépôt international: FR9700620
(87) Numéro de publication internationale: WO98045015

(56) Documents cités:
- DE-A- 2 502 371
- US-A- 2 609 277
- US-A- 4 133 714
- SOVIET INVENTIONS ILLUSTRATED Week 7931 17 septembre 1979 Derwent Publications Ltd., London, GB; AN 5766 XP002063946 & SU 628 940 A (KIEV FOOD IND INST) , 8 septembre 1978

## Description

L'invention concerne la résolution d'un mélange en au moins une première fraction et une deuxième fraction, différant l'une de l'autre par leurs teneurs ou compositions respectives en au moins un élément ou constituant, ce dernier pouvant être séparé au moins partiellement avec toute technique séparative appropriée, mise en oeuvre lors de la résolution dudit mélange.

De nombreuses opérations de génie chimique telles que la distillation, l'extraction liquide-liquide, la filtration ou le lavage méthodique de solides, requièrent la présence d'un contre-courant ou d'un reflux. Ce contre-courant, souvent indispensable à l'opération, est généralement obtenu par gravité, en utilisant la différence de densité de phases distinctes, lorsqu'une telle différence existe et est suffisante.

Lorsque les moyens physiques susceptibles de créer un reflux ou un contre-courant sont absents ou insuffisants, comme c'est le cas lors des séparations en phase homogène ou, en phase hétérogène, lorsque la différence de densité des phases est insuffisante, il devient nécessaire de recourir à d'autres moyens.

Ainsi pour séparer des phases ou fractions gazeuses par diffusion gazeuse, on doit à chaque étage de séparation assurer un reflux par extraction d'une partie des flux, suivie de la compression de celle-ci et de sa réinjection au sein du dispositif de séparation.

De même, pour les opérations impliquant au moins une phase ou fraction liquide et au moins une phase ou fraction solide, on doit mettre en oeuvre une succession d'opérations, telles que filtration ou centrifugation, débatissage du gâteau, remise en suspension de celui-ci, pompage, et enfin réintroduction vers la filtration.

Les divers moyens qu'il convient alors de mettre en oeuvre sont souvent complexes à conduire et coûteux en appareillages et moyens de contrôle ; ils impliquent en outre des charges importantes en main d'oeuvre d'exploitation et d'entretien et un coût élevé en énergie. Ces moyens ont de plus une incidence négative sur la fiabilité de l'installation de résolution du ou des mélanges traités.

Le document US-A-2 609 277 concerne une colonne pour contact liquide/liquide et gaz/liquide, qui peut comprendre des parois poreuses ou perforées, ou bien des clapets, mais pas les deux. Le passage des fluides d'un étage à l'autre est donc contrôlé par les clapets, mais il n'y a pas d'opération d'enrichissement ou appauvrissement, simultanée.

Dans l'appareil pulsé décrit par le document US-A-4 133 714, destiné aux échanges gaz/solide/liquide, les étages sont séparés par une paroi perforée qui présente une ouverture. Cependant, aucun obturateur mobile n'est mis en oeuvre. Durant les pulsations le liquide entre et ressort librement dans/d'un étage.

Le document DE-A-25 02 371 décrit des colonnes conventionnelles pour échanges liquide/liquide puisés. Les parois perforées séparant les étages comprennent des ouvertures ou des filtres, mais pas les deux. Les pistons mis en oeuvre ne quittent jamais les cylindres correspondants, au travers desdits cylindres.

Le document SU-A-628 940 décrit un appareil pour l'extraction solide/liquide. Les étages pulsants sont séparés par des plateaux perforés qui retiennent en partie les solides, sans qu'il s'agisse de filtres.

La présente invention se propose de remédier à tout ou partie de ces divers inconvénients en regroupant les organes ou moyens assurant et les fonctions de séparation et les fonctions de recyclage ou reflux.

Par recyclage, il y a lieu d'entendre ici tout retour d'au moins un flux vers ou dans une enceinte de résolution d'un mélange, y compris l'établissement d'un reflux ou d'un contre-courant.

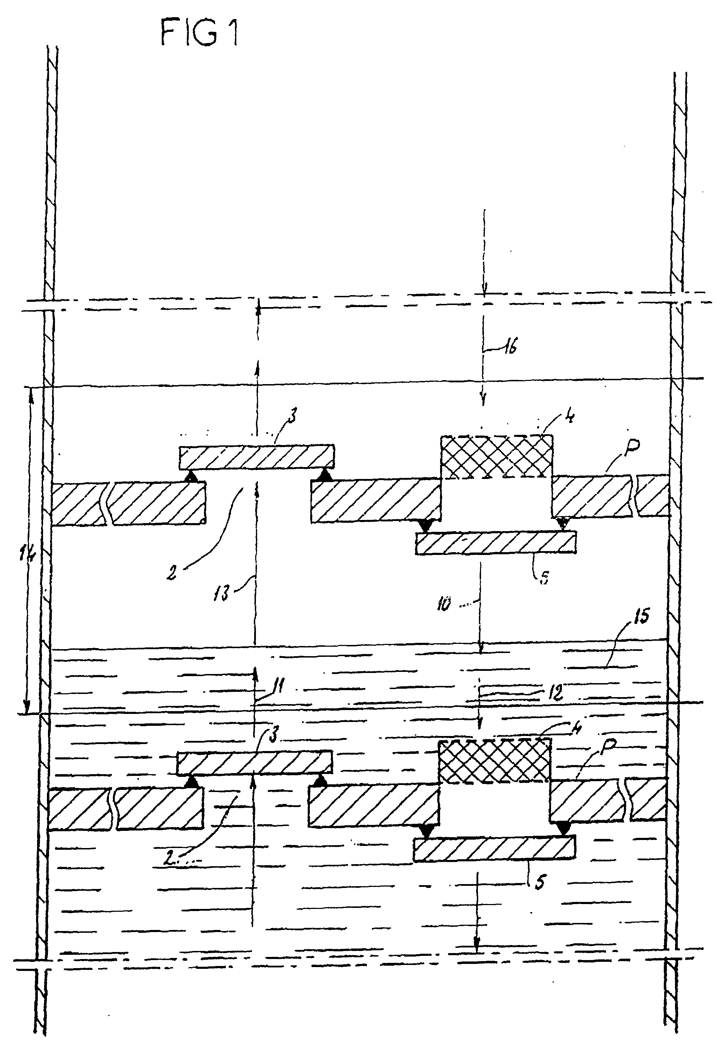

Conformément à la figure 1, un procédé de résolution selon l'invention permet de résoudre un mélange en au moins une première fraction et une deuxième fraction, différant l'une de l'autre par leurs compositions respectives en au moins un élément. Ce procédé comporte une pluralité d'étapes élémentaires de fractionnement, selon lesquelles on met en contact au moins deux flux entrants, à savoir un premier flux entrant (10) pauvre en première fraction, et un deuxième flux entrant (11) pauvre en deuxième fraction, pour obtenir deux flux sortants, à savoir un premier flux sortant (12) enrichi en première fraction, par rapport au premier flux entrant (10), et un deuxième flux sortant (13) enrichi en deuxième fraction par rapport au deuxième flux entrant (11) chaque étape élémentaire de fractionnement, non stationnaire, étant mise en oeuvre dans un étage élémentaire (14) de fractionnement, au niveau duquel on accumule un volume tampon (15) d'échange de masse et chaque étape élémentaire de fractionnement commandée et répétée périodiquement comprenant au moins les phases suivantes :
a) appauvrissement (4) en première fraction, selon une technique séparatrice choisie dans le groupe constitué par la filtration, la diffusion gazeuse, l'ultrafiltration et l'osmose inverse, d'un premier flux (16) relativement riche en ladite première fraction, pour obtenir le premier flux entrant (10),
b) introduction et mélange du premier flux entrant (10) dans le volume tampon (15) ; puis introduction et mélange du deuxième flux entrant (11) dans le volume tampon (15),
c) extraction du premier flux sortant (12) du volume tampon (15) ; puis extraction du deuxième flux sortant (13) du volume tampon,
l'appauvrissement (4) en première fraction du premier flux étant effectué concomitamment à l'introduction du premier flux entrant (10),
l'introduction du premier flux entrant (10) étant effectuée concomitamment à l'extraction du premier flux sortant (12),
l'introduction du deuxième flux entrant (11) étant effectuée concomitamment à l'extraction du deuxième flux sortant (13),
l'extraction du deuxième flux sortant (13) étant interrompue, pendant l'introduction du premier entrant (10), et l'introduction du premier flux entrant (10) étant interrompue pendant l'extraction du deuxième flux sortant (13),
l'introduction du deuxième flux entrant (11) étant interrompue pendant l'extraction du premier flux sortant (12), et l'extraction du premier flux sortant (12) étant interrompue pendant l'introduction du deuxième flux entrant (11).

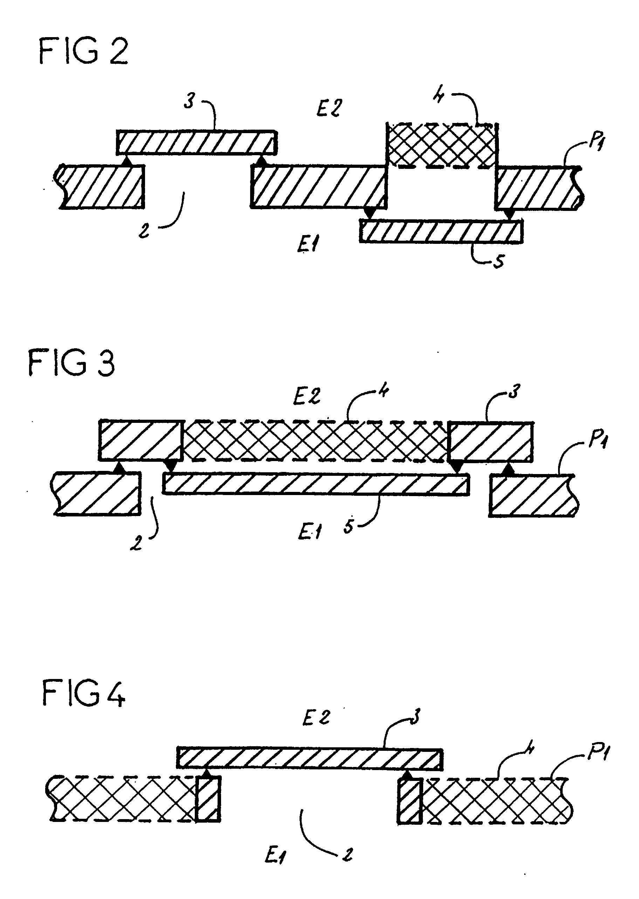

La présente invention comporte encore les modes d'exécution suivants :
- l'état physique du volume tampon 15 est adapté à un échange de masses en phase homogène ou hétérogène, choisi parmi les échanges liquide/liquide, liquide/gaz, liquide/solide, gaz/solide, gaz/gaz, gaz/liquide/solide,
- comme décrit par rapport au dispositif de mise en oeuvre selon figures 2 à 7, au moins l'une des phases suivantes, à savoir introduction du premier flux entrant 10, l'introduction du deuxième flux entrant 11, l'extraction du premier flux sortant 12, l'extraction du deuxième flux sortant 13, est commandée en agissant sur un différentiel de pression existant de part et d'autre de l'étage de fractionnement 14,
- au moins l'une des phases décrites au paragraphe précédent est contrôlée en fonction de la composition en première fraction et/ou deuxième fraction du volume tampon,
- ce volume tampon est mis en turbulence dans chaque étage de fractionnement.

Pour terminer, un procédé selon l'invention peut comprendre plusieurs étapes élémentaires de fractionnement, telles que définies précédemment, effectuées méthodiquement dans respectivement plusieurs étages élémentaires de fractionnement, successifs, moyennant quoi à partir d'un ou plusieurs mélanges, on obtient au moins un premier courant sortant enrichi en première fraction, et un deuxième courant sortant enrichi en deuxième fraction. Ces étapes élémentaires de fractionnement sont répétées de manière identique, selon la même période, d'un étage de fractionnement à l'autre.

Conformément aux figures 2 à 7 annexées, il est décrit à titre d'exemple non limitatif une installation permettant de mettre en oeuvre le procédé précédemment défini. Ce dispositif est caractérisé en ce qu'il comprend une paroi (P₁) délimitant de part et d'autre deux espaces (E₁, E₂) dans lesquels règnent en fonctionnement respectivement des pressions distinctes (Pr₁, Pr₂), ledit dispositif comportant :
a) au moins un orifice (2) muni d'un obturateur (3) et
b) au moins un organe de séparation (4) muni, le cas échéant, d'un obturateur (5),
et en ce que l'orifice (2), son obturateur (3), l'organe de séparation (4) et, le cas échéant, l'obturateur (5) sont disposés et/ou agencés, de façon telle qu'un flux de matière traverse le(s) orifice(s) (2) lorsque Pr₁ est supérieure à Pr₂, et le(s) organe(s) de séparation (4) lorsque Pr₂ est supérieure à Pr₁.

Selon un mode particulier de réalisation, l'obturateur (3) et l'organe de séparation (4) muni le cas échéant de l'obturateur (5) sont réunis en un même élément mécanique ainsi que le présente la figure 3 annexée.

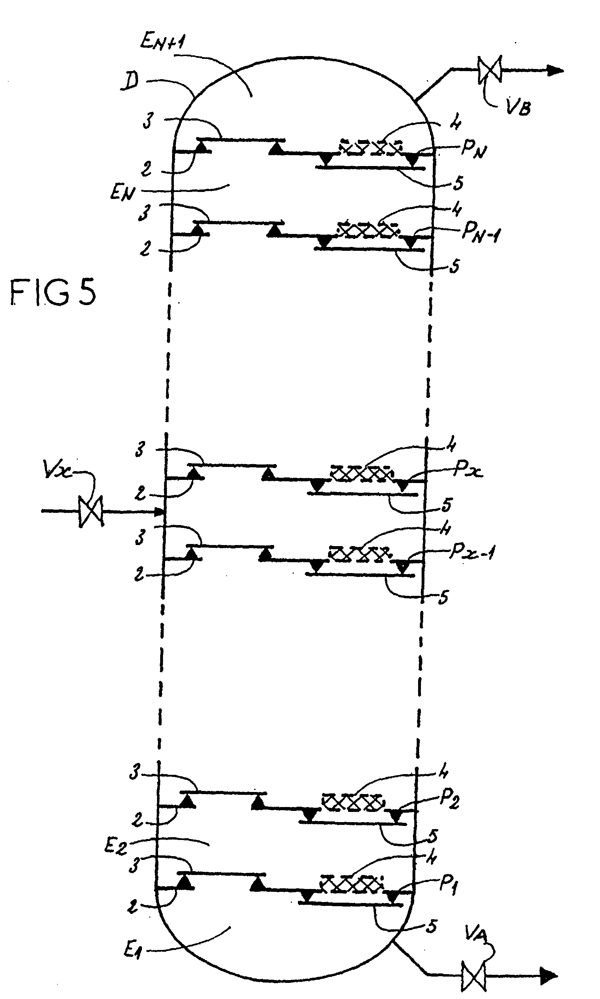

Selon un autre mode particulier de réalisation, l'organe de séparation (4) appartient à la paroi (P₁), l'obturateur (5) étant supprimé, ainsi que le représente la figure 4 annexée.

La présente invention a également pour objet une enceinte munie d'organes d'alimentation et d'évacuation, caractérisée en ce que :
a) elle renferme une pluralité (N) de dispositifs tels que précédemment définis, identiques entre eux ou différents, dont les parois (P₁ à P_{N}) délimitent un nombre (N+1) d'espaces (E₁ à E_{N+1}), géométriquement identiques ou différents, dans lesquels règnent en fonctionnement respectivement des pressions distinctes Prₓ et Prₓ₊₁, de part et d'autre d'une paroi (Pₓ) d'un étage X,
b) chaque étage formé d'une paroi (Pₓ) dotée d'au moins un orifice (2), de son obturateur (3), d'au moins un organe de séparation (4) et, le cas échéant, de son obturateur (5) est disposé et/ou agencé, de façon telle qu'un flux de matière traverse le(s) orifice(s) (2) lorsque (Prₓ) est supérieure à (Prₓ₊₁), et le(s) organe(s) de séparation (4) lorsque (Prₓ₊₁) est supérieure à Prₓ,
c) l'ensemble des étages est disposé et/ou agencé de telle sorte que tout ou partie dudit flux de matière traverse l'ensemble.

L'installation selon l'invention comprend, comme indiqué précédemment et représenté notamment sur la figure 2, une paroi (P₁) qui comporte au moins un organe de séparation (4).

Cet organe est choisi en fonction de la technique séparative retenue parmi, notamment, les filtres, les barrières de diffusion gazeuse et les organes d'ultrafiltration, d'osmose inverse, connus de l'homme de l'art, et destinés à modifier la composition des milieux les traversant.

Ces organes séparateurs (4) peuvent être munis d'obturateurs (5). Bien entendu les obturateurs (3) et, lorsqu'ils sont présents, les obturateurs (5), sont mobiles.

D'autres variantes et/ou caractéristiques avantageuses susceptibles d'être présentées par l'installation selon l'invention apparaîtront à la lecture de ce qui suit.

L'invention a également pour objet une enceinte renfermant une pluralité de tels dispositifs. Une telle enceinte (D) est représentée schématiquement sur la figure 5 annexée.

Un nombre (N) d'éléments (Px), non nécessairement dimensionnellement identiques, délimitant (N+1) espaces (E) non nécessairement égaux, sont disposés dans l'enceinte (D) munie, outre ses dispositifs usuels de vidange, de sécurité, de contrôle ou d'inspection, non représentés, de divers dispositifs d'alimentation (V_{X}) et d'évacuation (V_{A}, V_{B}).

Selon un mode de fonctionnement particulièrement avantageux, le milieu à traiter introduit dans l'enceinte est soumis, par tout organe de commande approprié, électrique, mécanique, externe ou interne, de pulsation alternée de pression, à des admissions pulsées des flux à traiter, et des soutirages pulsés des produits obtenus.

Pour chaque dispositif, selon la figure 2, lorsque la pression Pr₂ est supérieure à la pression Pr₁, les obturateurs (5) s'ils existent, sont mis, spontanément sous l'effet de la différence de pression, en position ouverte ; dans le même temps, de façon semblable, les obturateurs (3) sont fermés. Sous l'effet de la différence de pression, le milieu contenu dans l'espace (E₂) est dirigé vers l'espace (E₁) au travers des éléments séparateurs (4), et subit tout ou partie des enrichissements ou appauvrissements désirés.

Lorsque l'alternance des pulsations de pression conduit la pression Pr₁ à devenir supérieure à la pression Pr₂, les obturateurs (3) sont ouverts, les obturateurs (5), s'ils existent, sont fermés. Le milieu contenu dans l'espace (E₁) passe sous l'effet de la différence de pression vers l'espace (E₂) au travers des orifices (2), constituant ainsi le reflux, le recyclage ou le contre-courant désiré.

L'organe de commande de pulsation alternée inverse à nouveau la différence de pression Pr₁ et Pr₂, et par conséquent les sens des flux traversant l'élément de séparation.

La répétition périodique des pulsations dont la durée et l'amplitude dépendent, comme le nombre et les caractéristiques dimensionnelles des dispositifs ou enceintes selon l'invention, de la composition et des débits des milieux à traiter, permet, appliquée à la totalité des éléments de séparation de l'enceinte (D), d'obtenir un effet de reflux ou de contre-courant semblable à celui obtenu habituellement par d'autres moyens, notamment dans les colonnes à distiller, les colonnes d'extraction liquide/liquide ou les systèmes de lavage/extraction méthodique des solides.

Selon un mode particulier de réalisation, l'ouverture des obturateurs (3) peut, lorsque la pression Pr₁ devient supérieure à la pression Pr₂, être retardée par tout organe approprié tel que, notamment, la commande extérieure et l'utilisation de clapets tarés, afin de provoquer une circulation partielle en sens contraire dans les organes séparateurs (4), facilitant, selon l'utilisation, les opérations de décolmatage, et tendant à maintenir, prolonger ou restaurer les propriétés séparatrices des moyens utilisés à cette fin.

Selon un autre mode particulier de réalisation non illustré, les espaces situés entre les éléments de séparation peuvent être pourvus d'éléments turbulateurs ou pulsateurs, actifs ou passifs, par l'effet de pulsations de pression, afin notamment, dans le cas du traitement de milieux compressibles, de créer les pulsations nécessitées pour une bonne mise en oeuvre du procédé selon l'invention, ou de remédier à leur atténuation résultant des pertes de charge subies par les fractions ou flux lors du franchissement des moyens de séparation.

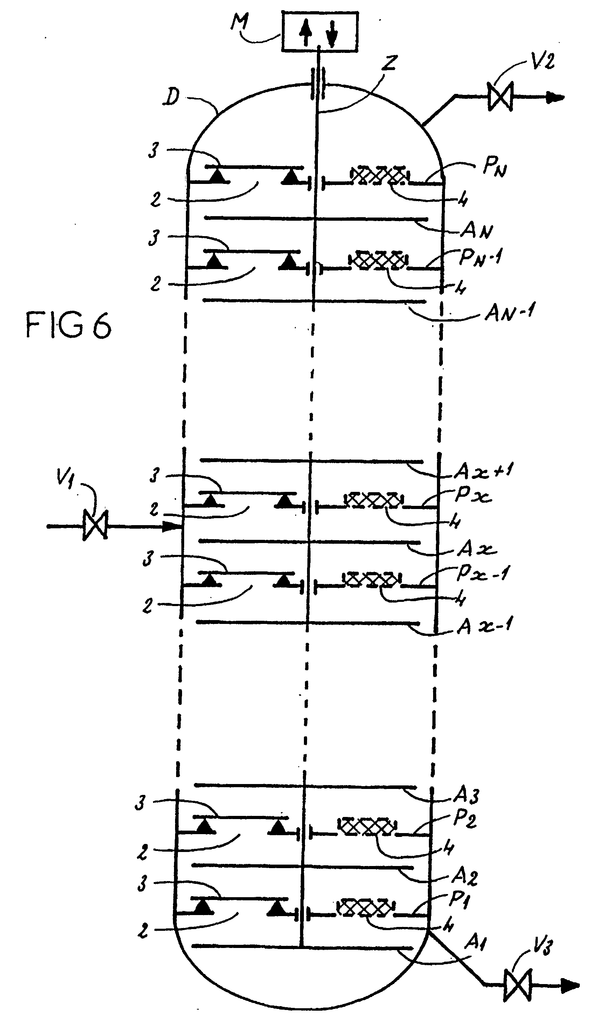

Selon une variante de réalisation, appropriée au traitement des gaz, la figure 6 représente une enceinte plus particulièrement destinée à une opération de séparation des gaz de l'air.

Une enceinte (D) de section sensiblement circulaire, contient (N) dispositifs selon l'invention, sensiblement plans (P₁, P₂, ..., Pₓ, ..., P_{N-2}, P_{N-1}, P_{N}), dont le nombre et les caractéristiques peuvent être déterminés de manière en soi connue par l'homme de l'art, en fonction notamment, des pressions, débits et compositions opératoires, ainsi que des performances des modules de diffusion gazeuse (4) qui ne comportent pas d'obturateurs.

Les obturateurs (3) sont des clapets rappelés par leur propre poids.

L'appareil est muni d'un organe mécanique de commande pulsatoire, constitué d'une pluralité (N) de plateaux rigides (A₁, A₂, ..., A_{N-1},A_{N}) identiques ou différents, n'occupant pas la totalité de la section (D), situés entre les dispositifs selon l'invention et reliés entre eux par un arbre (Z), traversant perpendiculairement et de façon sensiblement étanche lesdits dispositifs.

L'ensemble arbre-plateaux est mu par un moteur pneumatique (M), engendrant des mouvements oscillatoires, d'amplitude et de période ou fréquence, contrôlées parallèlement à l'axe (Z) de l'enceinte (D).

Chacun des plateaux (A₁, A₂, ..., A_{N-1,}A_{N}) est donc analogue à un piston non étanche, mu alternativement dans l'espace séparant deux dispositifs selon l'invention.

L'air, admis à pression constante en (V₁) est fractionné dans l'appareil en un flux sortant enrichi et un flux sortant appauvri en oxygène, qui sont collectés respectivement en V₂ et V₃.

Bien entendu, les moyens de contrôle, d'analyse et de sécurité du système ne sont pas représentés.

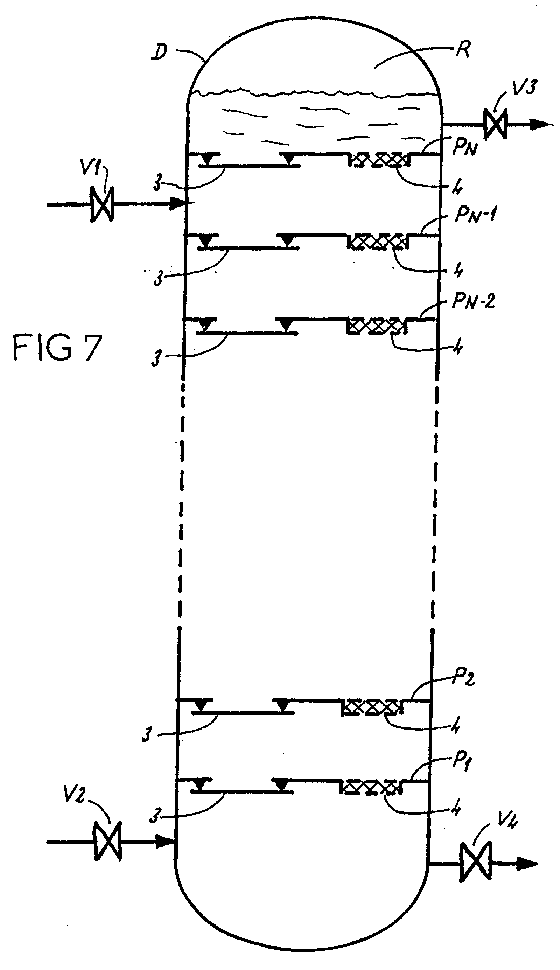

Selon une autre variante de réalisation, appropriée au traitement des solides par les liquides, la figure 7 représente une enceinte plus particulièrement destinée à une extraction méthodique de principes aromatiques contenus dans un substrat végétal, ligneux, broyé et ne décantant pas dans le solvant d'extraction choisi.

L'enceinte (D) contient (N) dispositifs (P₁, P₂, ..., P_{N-1}, P_{N}) selon l'invention, dont le nombre et les caractéristiques peuvent être déterminés de manière en soi connue par l'homme de l'art en fonction, notamment, des débits et compositions opératoires, ainsi que des performances des filtres (4) qui ne comportent pas d'obturateurs.

Les obturateurs (3) sont des clapets rappelés par des ressorts tarés de façon à provoquer, lorsque le flux tend à emprunter les orifices (2), un contre-courant temporaire dans les filtres (4), facilitant le décolmatage desdits filtres ainsi que le débatissage des amas de solides éventuellement constitués.

La partie supérieure de l'enceinte (D) comporte une poche (R) de gaz inerte maintenue sous pression.

La bouillie vierge à traiter, constituée d'un mélange du broyat végétal avec une quantité appropriée de solvant, est admise en (V₁) sous le dispositif (P_{N}).

Le solvant pauvre, neuf et/ou régénéré, est admis par flux périodique en (V₂) dans la partie inférieure de (D), alors que la bouillie épuisée, soutirée en (V₄) vers un réservoir non représenté, maintenu à une pression voisine de la pression atmosphérique, est extraite également de manière périodique. L'alimentation en (V₂) et le soutirage en (V₄) sont alternés, de façon que des flux alternés en résultent dans l'enceinte (D), circulent à travers l'ensemble des dispositifs selon l'invention qu'elle contient et, par suite, conduisent à l'effet désiré de filtrations et recyclages successifs.

Le flux de solvant enrichi en principes aromatiques dissous est extrait en (V₃), en tête de l'enceinte (D), pour être traité dans un système de régénération non représenté où sont récupérés les principes aromatiques initialement contenus dans la bouillie vierge.

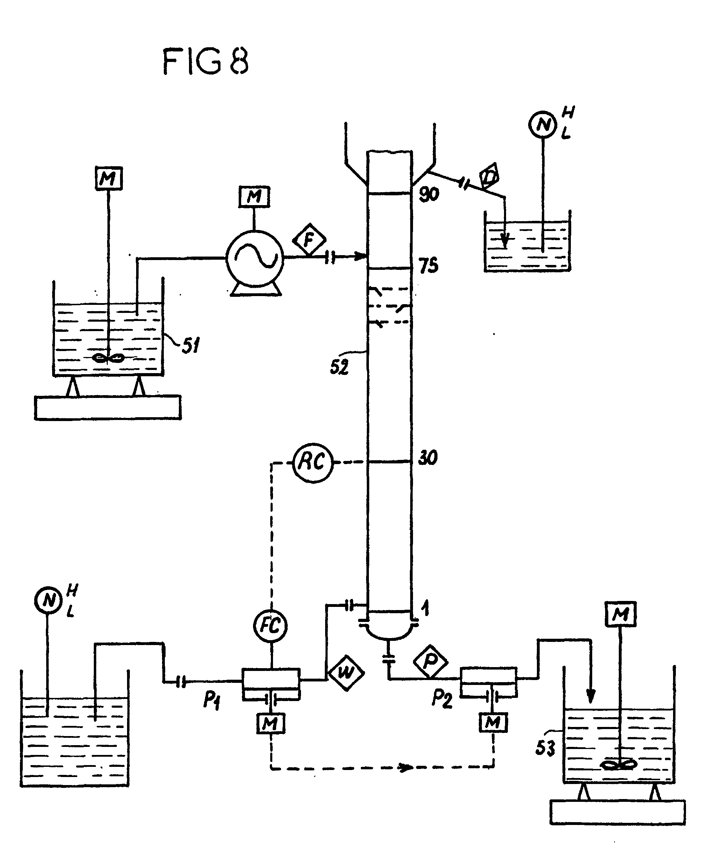

Conformément à la figure 8 en annexe, il est décrit une installation similaire à celle décrite par référence à la figure 7, permettant de produire du dioxyde de titane, par lavage d'une suspension d'acide métatitanique résultant de l'hydrolyse de sulfate de titanyle, telle qu'obtenue dans tout procédé conventionnel de fabrication de pigments de dioxyde de titane à partir de "slags".

La suspension d'acide métatitanique est contenue dans un fût 51 de 200 litres, et homogénéisée par agitateur à hélice à rotation lente. Cette suspension est alimentée par pompe péristaltique, au plateau 75 d'une colonne de lavage 52, fonctionnant selon le procédé de l'invention. La suspension ainsi alimentée est repérée sur la figure 8 par la lettre "F".

Le produit lavé est extrait du fond de la colonne 52, par une pompe volumétrique P₂ à membrane, vers un fût 53 agité avec une hélice à rotation lente. Le produit lavé est repéré sur la figure 8 par la lettre "P".

L'eau de lavage, repérée par la lettre "W" est introduite, par une pompe volumétrique à cycle constant, mais en opposition de phase avec la pompe volumétrique précédente, et dont la cylindrée est ajustée automatiquement en fonction de la résistivité du volume tampon ou milieu au niveau du plateau 30 de la colonne 52.

Le liquide mère d'imprégnation, repéré par la lettre "D" sur la figure 8, légèrement dilué par une partie de l'eau de lavage, est soutiré par surverse naturelle en tête de la colonne 52.

La colonne 52 consiste en un fût en acier et en verre de diamètre 160 mm. Les différents plateaux sont en PVC raidi, et sont entretoisés avec un écartement de 20 mm. Chaque plateau comporte une surface unitaire de filtration de l'ordre de 100 cm², avec une surface obturée par un clapet, de l'ordre de 6 cm². La filtration est obtenue par une toile de PTFE (polytétrafluoroéthylène)par exemple. Cette filtration s'effectue dans le sens ascendant, tandis que les clapets s'ouvrent dans le sens descendant.

Quant aux pompes volumétriques à membranes, à course variable, elles ont une cylindrée de l'ordre 500 cm². La pompe pour l'eau déminéralisée est contrôlée en fonction de la résistivité au niveau du plateau 30, comme précédemment indiqué. Et la pompe volumétrique affectée au produit lavé est réglable manuellement en opposition de phase avec la pompe précédente. C'est cette opposition de phases de pompes P₁ et P₂, qui génère les flux alternés dans la colonne 52

Les résultats obtenus, après stabilisation de six heures sont montrés dans le tableau ci-après. Avec une quantité limitée d'eau de lavage et sans diluer excessivement le liquide d'imprégnation, pour minimiser le traitement des effluents, on obtient une qualité correspondant à trois filtration/lavage/repulpage successifs sur filtres à cartouche traditionnelle.

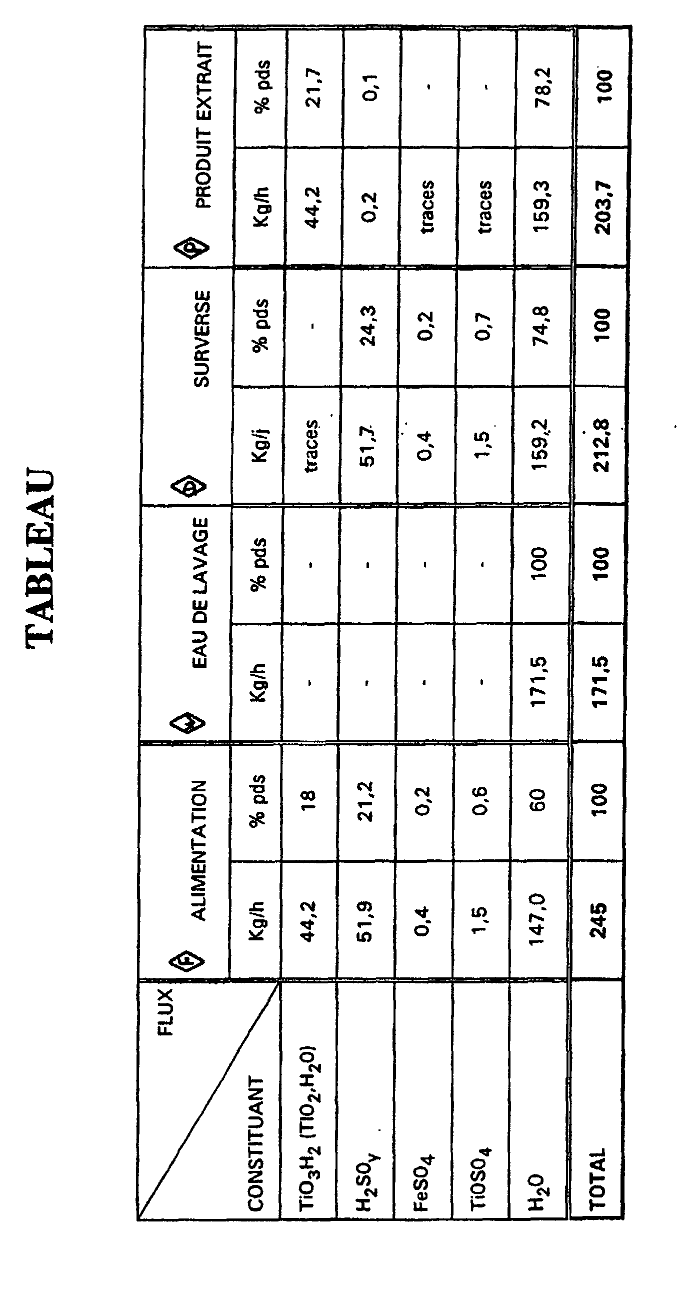

Les applications de l'invention se situent dans les domaines suivants :
- séparation des gaz :
   . Enrichissement isotopique en U₂₃₅ d'un flux gazeux, mélange de U₂₃₈F₆ et de U₂₃₅F₆,
   . séparation des gaz de l'air : oxygène, azote, gaz rares,
   . séparation de molécules chimiques formant azéotrope.
- contacts gaz-solides :
   . imprégnation ou traitement chimique de phases solides peu denses,
   . catalyse hétérogène avec extraction régénération - recyclage de catalyseur,
   . réactions gaz/solide.
- contacts liquide/solide :
   . traitement de minerais à faible densité apparente,
   . lavage méthodique de cristaux,
   . catalyse hétérogène de réactions chimiques avec extraction - régénération - recyclage de catalyseur,
   . extraction d'arômes, de principes pharmaceutiques,
   . Purification de produits alimentaires,
   . Dissolution de solides,
- Contacts gaz/liquide/solide :
   . réactions chimiques gaz-liquide en catalyse hétérogène (hydrogénations, oxydations, alkylations...).
- Séparations liquide/liquides homogènes :
   . osmose inverse, échanges d'ions.

Et ces applications se situent dans tous types d'industries.

## Revendications

1. Procédé de résolution d'un mélange en au moins une première fraction et une deuxième fraction, différentes par leurs compositions respectives en au moins un élément, comprenant une pluralité d'étapes élémentaires de fractionnement, selon lesquelles on met en contact au moins deux flux entrants, à savoir un premier flux entrant (10) pauvre en première fraction, et un deuxième flux entrant (11) pauvre en deuxième fraction, pour obtenir deux flux sortants, à savoir un premier flux sortant (12) enrichi en première fraction, par rapport au premier flux entrant (10), et un deuxième flux sortant (13) enrichi en deuxième fraction par rapport au deuxième flux entrant (11), chaque étape élémentaire de fractionnement, non stationnaire, étant mise en oeuvre dans un étage élémentaire (14) de fractionnement, au niveau duquel on accumule un volume tampon (15) d'échange de masse, et chaque étape élémentaire de fractionnement commandée et répétée périodiquement comprenant au moins les phases suivantes :
a) appauvrissement (4) en première fraction, selon une technique séparatrice choisie dans le groupe constitué par la filtration, la diffusion gazeuse, l'ultrafiltration et l'osmose inverse, d'un premier flux (16) relativement riche en ladite première fraction, pour obtenir le premier flux entrant (10),
b) introduction et mélange du premier flux entrant (10) dans le volume tampon (15) ; puis introduction et mélange du deuxième flux entrant (11) dans le volume tampon (15),
c) extraction du premier flux sortant (12) du volume tampon (15) ; puis extraction du deuxième flux sortant (13) du volume tampon,
l'appauvrissement (4) en première fraction du premier flux étant effectué concomitamment à l'introduction du premier flux entrant (10),
l'introduction du premier flux entrant (10) étant effectuée concomitamment à l'extraction du premier flux sortant (12),
l'introduction du deuxième flux entrant (il) étant effectuée concomitamment à l'extraction du deuxième flux sortant (13),
l'extraction du deuxième flux sortant (13) étant interrompue, pendant l'introduction du premier entrant (10), et l'introduction du premier flux entrant (10) étant interrompue pendant l'extraction du deuxième flux sortant (13),
l'introduction du deuxième flux entrant (11) étant interrompue pendant l'extraction du premier flux sortant (12), et l'extraction du premier flux sortant (12) étant interrompue pendant l'introduction dû deuxième flux entrant (11).

2. Procédé selon la revendication 1, **caractérisé en ce que** l'échange de masse ayant lieu dans le volume tampon (15) est un échange en phase homogène ou hétérogène, du type liquide/liquide, liquide/gaz, liquide/solide, gaz/solide, gaz/gaz, ou gaz/liquide/solide.

3. procédé selon la revendication 1, **caractérisé en ce que** au moins l'une des phases suivantes, à savoir introduction du premier flux entrant (10), introduction du deuxième flux entrant (11), extraction du premier flux sortant (12), extraction du deuxième flux sortant (13), est commandée en agissant sur un différentiel de pression existant de part et d'autre de l'étage de fractionnement (14).

4. Procédé selon la revendication 1, **caractérisé en ce que** au moins l'une des phases suivantes, à savoir introduction du premier flux entrant (10), introduction du deuxième flux entrant (11), extraction du premier flux sortant (12), extraction du deuxième flux sortant (13), est contrôlée en fonction de la composition en dit élément du volume tampon (15).

5. Procédé selon la revendication 1, **caractérisé en ce que** le volume tampon est mis en turbulence dans chaque étage de fractionnement.

6. Procédé selon la revendication 1, **caractérisé en ce qu'**il comprend plusieurs étapes élémentaires de fractionnement, effectuées méthodiquement dans respectivement plusieurs étages élémentaires de fractionnement, successifs, moyennant quoi à partir d'un ou plusieurs mélanges, on obtient au moins un premier courant sortant enrichi en première fraction et un deuxième courant sortant enrichi en deuxième fraction.

7. Procédé selon la revendication 1, **caractérisé en ce que** les étapes élémentaires de fractionnement sont répétées de manière identique, selon la même période, d'un étage de fractionnement à l'autre.

8. Installation pour la mise en oeuvre du procédé selon l'une quelconque des revendications 1 à 7, **caractérisée en ce qu'**elle comprend une paroi (P₁) délimitant de part et d'autre deux espaces (E₁, E₂) dans lesquels règnent en fonctionnement respectivement des pressions distinctes (Pr₁, Pr₂), ladite paroi comportant :
a) au moins un orifice (2) muni d'un obturateur mobile (3) et
b) au moins un organe de séparation (4) apte à effectuer une séparation par filtration, diffusion gazeuse, ultrafiltration ou osmose inverse, muni, le cas échéant, d'un obturateur mobile (5),
et **en ce que** l'orifice (2), son obturateur (3), l'organe de séparation (4) et, le cas échéant, l'obturateur (5), sont disposés et/ou agencés, de façon telle qu'un flux de matière traverse le(s) orifice(s) (2) lorsque Pr₁ est supérieure à Pr₂, ou le(s) organe(s) de séparation (4) lorsque Pr₂ est supérieure à Pr₁.

9. Installation selon la revendication 8, **caractérisée en ce que** l'obturateur (3) et l'organe de séparation (4) muni le cas échéant de l'obturateur (5) sont réunis en un même élément mécanique (Cf. Fig. 3).

10. Installation selon la revendication 8, **caractérisée en ce que** l'organe de séparation (4) appartient à la paroi (P₁).

11. Installation selon l'une quelconque des revendications 8 à 10, **caractérisée en ce que** l'orifice (2), son obturateur (3), l'organe de séparation (4) et, le cas échéant, l'obturateur (5) sont disposés et/ou agencés, de façon telle que les flux de matière traversent alternativement le(s) orifice(s) (2) lorsque Pr₁ est supérieure à Pr₂ et le(s) organes (s) de séparation (4) lorsque Pr₂ est supérieure à Pr₁, et ledit dispositif comprend un organe de commande de pulsations alternées de pression de part et d'autre de la paroi (P₁).

12. Installation selon l'une quelconque des revendications 8 à 10, **caractérisée en ce qu'**elle comprend un organe d'ouverture retardée de l'(des) obturateur(s) (3) par rapport à l'instant où la pression Pr₁ devient supérieure à la pression Pr₂.

13. Installation selon l'une quelconque des revendications 8 à 12, **caractérisée en ce qu'**elle comprend un organe de fermeture retardée de l'(des) obturateur(s) (5) par rapport à l'instant ou la pression Pr₁ devient supérieure à la pression Pr₂.

14. Enceinte munie d'organes d'alimentation et d'évacuation, **caractérisée en ce que** :
a) elle renferme une pluralité (N) d'installations selon l'une quelconque des revendications 8 à 13, identiques entre eux ou différents, dont les parois (P₁ à P_{N}) délimitent un nombre (N+1) d'espaces (E₁ à E_{N+1}), géométriquement identiques ou différents dans lesquels règnent en fonctionnement respectivement des pressions distinctes Prₓ et Prₓ₊₁, de part et d'autre d'une paroi (Pₓ) d'un étage X,
b) chaque étage formé d'une paroi (Pₓ), telle que définie dans la revendication a, est disposé et/ou agencé, de façon telle qu'un flux de matière traverse le(s) orifice(s) (2) lorsque (Prₓ) est supérieurs à (Prₓ₊₁) et le(s) organe(s) de séparation (4) lorsque (Prₓ₊₁) est supérieure à Prₓ,

15. Enceinte selon la revendication 14, **caractérisée en ce que** les divers étages qu'elle renferme sont agencés pour réagir à des pulsations de pression et laisser passer des flux alternés de matières.

16. Enceinte selon la revendication 14, **caractérisée en ce qu'**elle renferme également, dans toute partie des espaces délimités par les parois (P1 à PN), un ou plusieurs élément(s) mobile (s) agencé(s) pour créer et/ou amplifier les pulsations des flux alternés.

## Claims

1. Process for resolving a mixture into at least a first fraction and a second fraction, these fractions differing by their respective compositions of at least one element, comprising a plurality of elementary fractionation steps, in which steps at least two inflows, namely a first inflow (10) depleted in the first fraction, and a second inflow (11) depleted in the second fraction, are brought into contact with each other in order to obtain two outflows, namely a first outflow (12) enriched in the first fraction compared with the first inflow (10) and a second outflow (13) enriched in the second fraction compared with the second inflow (11), each elementary, non-stationary, fractionation step being carried out in an elementary fractionation stage (14), at which stage a mass-exchange buffer volume (15) is accumulated, and each elementary fractionation step initiated and repeated periodically comprises at least the following phases:
a) depletion (4) in the first fraction, using a separating technique chosen from the group consisting of filtration, gas diffusion, ultrafiltration and reverse osmosis, of a first flow (16) relatively rich in the said first fraction, in order to obtain the first inflow (10),
b) introduction and mixing of the first inflow (10) in the buffer volume (15); then introduction and mixing of the second inflow (11) in the buffer volume (15),
c) extraction of the first outflow (12) from the buffer volume (15); then extraction of the second outflow (13) from the buffer volume,
the depletion (4) in the first fraction of the first flow being carried out concomitantly with the introduction of the first inflow (10),
the introduction of the first inflow (10) being carried out concomitantly with the extraction of the first outflow (12),
the introduction of the second inflow (11) being carried out concomitantly with the extraction of the second outflow (13),
the extraction of the second outflow (13) being interrupted during the introduction of the first inflow (10), and the introduction of the first inflow (10) being interrupted during the extraction of the second outflow (13) and
the introduction of the second inflow (11) being interrupted during the extraction of the first outflow (12), and the extraction of the first outflow (12) being interrupted during the introduction of the second inflow (11).

2. Process according to Claim 1, **characterized in that** the mass exchange taking place in the buffer volume (15) an exchange, in homogeneous or heterogeneous phase, of the liquid/liquid, liquid/gas, liquid/solid, gas/solid, gas/gas or gas/liquid/solid type.

3. Process according to Claim 1, **characterized in that** at least one of the following steps, namely introduction of the first inflow (10), introduction of the second inflow (11), extraction of the first outflow (12) and extraction of the second outflow (13), is initiated by acting on a pressure differential existing on either side of the fractionation stage (14).

4. Process according to Claim 1, **characterized in that** at least one of the following steps, namely introduction of the first inflow (10), introduction of the second inflow (11), extraction of the first outflow (12) and extraction of the second outflow (13), is controlled according to the composition in terms of said element of the buffer volume (15).

5. Process according to Claim 1, **characterized in that** turbulence is created in the buffer volume in each fractionation stage.

6. Process according to Claim 1, **characterized in that** it comprises several elementary fractionation steps, carried out methodically in respectively several successive elementary fractionation stages, by means of which, starting from one or more mixtures, at least a first outgoing stream enriched in the first fraction and a second outgoing stream enriched in the second fraction are obtained.

7. Process according to Claim 1, **characterized in that** the elementary fractionation steps are repeated in an identical manner, depending on the period, from one fractionation stage to another.

8. Device for the implementation of the process according to any one of Claims 1 to 7, **characterized in that** it comprises a wall (P₁) defining, on either side, two spaces (E₁, E₂) in which, in operation, different pressures (Pr₁, Pr₂) prevail, the said wall including:
a) at least one orifice (2) provided with a movable shutter (3) and
b) at least one separating member (4) capable of performing a separation by filtration, gas diffusion, ultrafiltration or reverse osmosis, provided, if required, with a movable shutter (5),
and **in that** the orifice (2), its shutter (3), the separating member (4) and, if required, the shutter (5) are arranged and/or designed in such a way that a flow of material passes through the orifice(s) (2) when Pr₁ is greater than Pr₂ or separating member(s) (4) when Pr₂ is greater than Pr₁.

9. Device according to Claim 8, **characterized in that** the shutter (3) and the separating member (4) provided if required with the shutter (5) are joined together as a single mechanical component (cf. Fig. 3).

10. Device according to Claim 8, **characterized in that** the separating member (4) forms part of the wall (P₁).

11. Device according to any one of Claims 8 to 10, **characterized in that** the orifice (2), its shutter (3), the separating member (4) and, if required, the shutter (5) are arranged and/or designed in such a way that the flows of material pass alternately through the orifice(s) (2) when Pr₁ is greater than Pr₂ and the separating member(s) (4) when Pr₂ is greater than Pr₁, and the said device comprises a member for initiating alternating pressure pulses on either side of the wall (P₁).

12. Device according to any one of Claims 8 to 10, **characterized in that** it comprises a member for the delayed opening of the shutter(s) (3) with respect to the instant at which the pressure Pr₁ becomes greater than the pressure Pr₂.

13. Device according to any one of Claims 8 to 12, **characterized in that** it comprises a member for the delayed closing of the shutter(s) (5) with respect to the instant at which the pressure Pr₁ becomes greater than the pressure Pr₂.

14. Vessel provided with feed and discharge members, **characterized in that**:
a) it contains a plurality (N) of devices according to any one of Claims 8 to 13, which are identical to each other or are different, the walls (P₁ to P_{N}) of which define a number (N+1) of spaces (E₁ to E_{N+1}) which are geometrically identical or different and in which, in operation, different pressures Prₓ and Prₓ₊₁ prevail on either side of a wall (Pₓ), of a stage X;
b) each stage formed from a wall (Pₓ), as defined in claim 8, is arranged and/or designed in such a way that a flow of material passes through the orifice(s) (2) when Prₓ is greater than Prₓ₊₁ and the separating member(s) (4) when Prₓ₊₁ is greater than Prₓ; [lacuna]

15. Vessel according to Claim 14, **characterized in that** the various stages that it contains are designed to react to pressure pulses and to allow alternating flows of material to pass through them.

16. Vessel according to Claim 14, **characterized in that** it also contains, in any part of the spaces defined by the walls (P₁ to P_{N}), one or more moveable elements designed to create and/or amplify the pulses of the alternating flows.

## Patentansprüche

1. Verfahren zum Auftrennen einer Mischung in zumindest eine erste Fraktion und in eine zweite Fraktion, die sich bezüglich zumindest eines Elementes ihrer jeweiligen Zusammensetzung unterscheiden, welches eine Vielzahl an einzelnen Fraktionierschritten aufweist, bei dem zumindest zwei eintretende Flüsse miteinander in Kontakt gebracht werden, nämlich ein erster eintretender Fluß (10), der an der ersten Fraktion verarmt ist, und ein zweiter eintretender Fluß (11), der an der zweiten Fraktion verarmt ist, um zwei austretende Flüsse zu erhalten, nämlich einen ersten austretenden Fluß (12), der an der ersten Fraktion im Hinblick auf den ersten eintretenden Fluß (10) angereichert ist, und einen zweiten austretenden Fluß (13), der im Hinblick auf den zweiten eintretenden Fluß (11) an der zweiten Fraktion angereichert ist, wobei jeder einzelne, nicht stationäre Fraktionierschritt in einer einzelnen Fraktionierstufe (14) durchgeführt wird, in der ein Massenaustauschpuffervolumen (15) angereichert ist, und wobei jeder einzelne Fraktionierschritt, der periodisch gesteuert und wiederholt wird, die folgenden Schritte aufweist, nämlich
a) Abreichern (4) der ersten Fraktion durch eine Abtrenntechnik ausgewählt aus der Gruppe bestehend aus Filtration, Gasdiffusion, Ultrafiltration und Umkehrosmose in einem ersten Fluß (16), der relativ angereichert an der ersten Fraktion ist, um den ersten eintretenden Fluß (10) zu erhalten;
b) Einführen und Mischen des ersten eintretenden Flusses (10) in das Puffervolumen (15); anschließend Einführen und Mischen des zweiten eintretenden Flusses (11) in das Puffervolumen (15),
c) Abführen des ersten austretenden Flusses (12) vom Puffervolumen (15); anschließend Abführen des zweiten austretenden Flusses (13) vom Puffervolumen, die Abreicherung (4) der ersten Fraktion im ersten Fluß wird begleitend zum Einführen des ersten eintretenden Flusses (10) durchgeführt;
das Einführen des ersten eintretenden Flusses (10) wird begleitend zum Abführen des ersten austretenden Flusses (12) durchgeführt,
das Einführen des zweiten eintretenden Flusses (11) wird begleitend zum Abführen des zweiten austretenden Flusses (13) durchgeführt,
das Abführen des zweiten austretenden Flusses (13) wird unterbrochen während des Einführens des ersten austretenden Flusses (10) und das Einführen des ersten eintretenden Flusses (10) wird unterbrochen während des Abführens des zweiten austretenden Flusses (13),
das Einführen des zweiten eintretenden Flusses (11) wird unterbrochen während des Abführens des ersten austretenden Flusses (12), und das Abführen des ersten austretenden Flusse (12) wird unterbrochen während des Einführens des zweiten eintretenden Flusses (11).

2. Verfahren nach Anspruch 1, **dadurch gekennzeichnet, daß** der Massenaustausch, der im Puffervolumen (15) stattfindet, ein Austausch in homogener oder heterogener Phase ist, und zwar vom Typ flüssig/flüssig, flüssig/gasförmig, flüssig/fest, gasförmig/fest, gasförmig/gasförmig, oder gasförmig/flüssig/fest.

3. Verfahren nach Anspruch 1, **dadurch gekennzeichnet, daß** zumindest einer der folgenden Vorgänge, nämlich Einführen des ersten eintretenden Flusses (10), Einführen des zweiten eintretenden Flusses (11), Abführen des ersten austretenden Flusses (12), Abführen des zweiten austretenden Flusses (13), dadurch gesteuert wird, indem ein Druckunterschied, der beidseits der Fraktionierstufe (14) existiert, wirken gelassen wird.

4. Verfahren nach Anspruch 1, **dadurch gekennzeichnet, daß** zumindest einer der folgenden Vorgänge, nämlich Einführen des ersten eintretenden Flusses (10), Einführen des zweiten eintretenden Flusses (11), Abführen des ersten austretenden Flusses (12), Abführen des zweiten austretenden Flusses (13) in Abhängigkeit der Zusammensetzung des Puffervolumenelements (15) gesteuert wird.

5. Verfahren nach Anspruch 1, **dadurch gekennzeichnet, daß** das Puffervolumen in jeder Fraktionierstufe in Turbulenz gebracht wird.

6. Verfahren nach Anspruch 1, **dadurch gekennzeichnet, daß** es zahlreiche einzelne Fraktionierschritte aufweist, die methodisch in jeweils zahlreichen einzelnen Fraktionierstufen aufeinanderfolgend durchgeführt werden, woraufhin man - ausgehend von einer oder mehreren Mischungen - zumindest einen austretenden an der ersten Fraktion angereicherten Strom und einen zweiten austretenden an der zweiten Fraktion angereicherten Strom erhält.

7. Verfahren nach Anspruch 1, **dadurch gekennzeichnet, daß** die einzelnen Fraktionierschritte, von einer Fraktionierstufe zur anderen gesehen, während demselben Zeitraum, in identischer Art und Weise wiederholt werden.

8. Vorrichtung zur Durchführung des Verfahrens nach einem der Ansprüche 1 bis 7, **dadurch gekennzeichnet, daß** diese eine Wand (P₁) aufweist, die beidseits davon zwei Räume (E₁, E₂) voneinander trennt, in denen im Betrieb jeweils unterschiedliche Drücke (Pr₁, Pr₂) herrschen, wobei die Wand folgendes aufweist, nämlich
a) zumindest eine Öffnung (2), die mit einem beweglichen Verschluß (3) versehen ist, und
b) zumindest ein Abtrennorgan (4), das dazu geeignet ist, eine Abtrennung durch Filtration, Gasdiffusion, Ultrafiltration oder Umkehrosmose zu bewirken, wobei dieses gegebenenfalls mit einem beweglichen Verschluß (5) versehen ist,
und daß die Öffnung (2), deren Verschluß (3), das Abtrennorgan (4) und gegebenenfalls der Verschluß (5) derart angeordnet und/oder ausgestaltet sind, daß ein Materialfluß die Öffnung(en) (2). durchquert, wenn Pr₁ höher als Pr₂ ist, oder das (die) Abtrennorgan(e) (4) durchdringt, falls Pr₂ höher als Pr₁ ist.

9. Vorrichtung nach Anspruch 8, **dadurch gekennzeichnet, daß** der Verschluß (3) und das Abtrennorgan (4) und gegebenenfalls der Verschluß (5) in ein und demselben mechanischen Element vereinigt sind (siehe Fig. 3).

10. Vorrichtung nach Anspruch 8, **dadurch gekennzeichnet, daß** das Abtrennorgan (4) der Wand (P₁) zugehörig ist.

11. Vorrichtung nach einem der Ansprüche 8 bis 10, **dadurch gekennzeichnet, daß** die Öffnung (2), deren Verschluß (3), das Abtrennorgan (4) und gegebenenfalls der Verschluß (5) derart angeordnet und/oder ausgestaltet sind, daß die Materialflüsse alternierend die Öffnung(en) (2) durchqueren, wenn Pr₁ höher als Pr₂ ist, und die Abtrennorgan(e) (4) durchqueren, wenn Pr₂ höher als Pr₁ ist, und wobei die Vorrichtung ein Steuerorgan mit alternierenden Druckpulsen beidseits der Wand (P₁) aufweisen.

12. Vorrichtung nach einem der Ansprüche 8 bis 10, **dadurch gekennzeichnet, daß** diese ein verzögertes Öffnungsorgan des (der) Verschlusses (-schlüsse) (3) für den Moment aufweist, wenn der Druck Pr₁ höher als der Druck Pr₂ wird.

13. Einrichtung nach einem der Ansprüche 8 bis 12, **dadurch gekennzeichnet, daß** es ein verzögertes Schließorgan des (der) Verschluß (-schlüsse) (5) für den Moment aufweist, wenn der Druck Pr₁ höher als der Druck Pr₂ wird.

14. Behältnis, ausgestattet mit Versorgungsorganen und Evakuierungsorganen, **dadurch gekennzeichnet, daß** dieses
a) eine Vielzahl (N) an Vorrichtungen nach einem der Ansprüche 8 bis 13 aufweist, die identisch untereinander oder verschieden sind, bei denen die Wände (P₁ bis P_{N}) eine Vielzahl (N+1) Räume (E₁ bis E_{N+1}) abgrenzen, die geometrisch identisch oder unterschiedlich sind, in denen im Betrieb jeweils unterschiedliche Drücke Prₓ und Pr_{X+1} beidseits einer Wand (Pₓ) einer Stufe X vorherrschen,
b) jede Stufe durch eine Wand (Pₓ) gebildet wird, wie sie in Anspruch 8 definiert ist, und derart angeordnet und/oder ausgebildet ist, daß ein Materialfluß die Öffnung(en) (2) durchquert, wenn (Prₓ) größer als (Pr_{X+1}) ist, und das die Abtrennorgan(e) (4) durchquert, wenn (Pr_{X+1}) größer als Prₓ ist.

15. Behältnis nach Anspruch 14, **dadurch gekennzeichnet, daß** die unterschiedlichen Stufen, die es aufweist, so ausgestaltet sind, daß diese auf Druckimpulse reagieren und alternierende Materialflüsse passieren lassen.

16. Behältnis nach Anspruch 14, **dadurch gekennzeichnet, daß** es gleichermaßen in jedem Raumabschnitt, der durch die Wände (P₁ bis PN) abgetrennt ist, ein oder mehrere bewegliche Elemente aufweist, die so ausgestaltet sind, um die Pulsation der alternierenden Ströme zu schaffen und/oder zu verstärken.
